# EUROPÄISCHE PATENTSCHRIFT

(11) **EP 0 813 547 B1**
(45) Veröffentlichungstag und Bekanntmachung des Hinweises auf die Patenterteilung: **14.04.1999**
(21) Anmeldenummer: 96905804.9
(22) Anmeldetag: 27.02.1996
(51) Int. Cl.: C08B 37/00, C08B 15/04, C08B 31/18

(54) **VERFAHREN ZUR HERSTELLUNG VON NEUTRALISIERTEN POLYCARBOXYLATEN AUF POLYSACCHARID-BASIS**
PROCESS FOR PREPARING NEUTRALISED POLYCARBOXYLATES BASED ON POLYSACCHARIDES
PROCEDE DE PREPARATION DE POLYCARBOXYLATES NEUTRALISES A BASE DE POLYSACCHARIDES

(30) Priorität: 07.03.1995 DE 19507717
(43) Veröffentlichungstag der Anmeldung: 29.12.1997
(73) Patentinhaber: Henkel Kommanditgesellschaft auf Aktien, 40191 Düsseldorf (DE)
(72) Erfinder: MÖLLER, Thomas, D-40593 Düsseldorf (DE); FISCHER, Herbert, D-40229 Düsseldorf (DE)
(86) Internationale Anmeldenummer: EP9600791
(87) Internationale Veröffentlichungsnummer: WO9627618

(56) Entgegenhaltungen:
- WO-A-93/16110

## Beschreibung

Die Erfindung betrifft ein vereinfachtes Verfahren zur Herstellung von Polycarboxylaten in ihrer Salzform durch selektive Oxidation von Polysacchariden mit gasförmigem Stickstoffdioxid und trockener Neutralisation des erhaltenen Oxidationsproduktes.

Zur Herstellung von Polycarboxylaten durch oxidative Behandlung von Polysacchariden, beispielsweise Cellulose, Stärke und Dextrinen, besteht umfangreiches Wissen. Verwiesen wird beispielsweise auf Houben-Weyl "Methoden der organischen Chemie", Thieme-Verlag, Stuttgart (1987) Bd. E 20, Makromolekulare Stoffe, hier das Unterkapitel "Polysaccharid-Derivate" bearbeitet von Dr. K. Engelskirchen, a.a.O. Seite 2042 ff, insbesondere Seite 2124 ff (Oxidationsprodukte der Cellulose) und Seite 2166 ff (Oxidierte Stärken). Verwiesen sei weiter auf die Veröffentlichung "Cellulose Chemistry and Its Applications" (1983), John Wiley & Sons, Chichester, GB, dort insbesondere T.P.Nevell, "Oxidation of Cellulose" (Kapitel 10) sowie die umfangreiche dort zitierte Literatur, a.a.O Seite 262 bis 265.

Grob zusammenfassend gilt: Eine Vielzahl von Oxidationsmitteln ist für die Oxidation von Polysacchariden, insbesondere von ausschließlich aus Glucose aufgebauten Polyglucosanen gebräuchlich. Genannt seien beispielsweise (Luft)-Sauerstoff, Wasserstoff-Peroxid, Natriumhypochlorit beziehungsweise -bromit, Periodsäure beziehungsweise Periodate, Blei(IV)-Acetat, Stickstoffdioxid und Cer(IV)-Salze. Diese Oxidationsmittel reagieren sehr unterschiedlich mit den Anhydroglucoseeinheiten, vgl. beispielsweise die Formelbilder in Houben-Weyl a.a.O. Seite 2124. So bewirken beispielsweise Perjodate oder Blei(IV)-Acetat eine C-C Spaltung der Anhydroglucose-Ringe; man erhält aus Cellulose die sogenannte 2,3-Dialdehydcellulose und analog aus Stärke Dialdehydstärke. Bekannt ist außerdem, daß bei der Einwirkung von Stickstoffdioxid auf Cellulose die Oxidation der primären Alkoholgruppe zur Carboxylgruppe die weitaus überwiegende Reaktion ist. Das Oxidationsmittel, in der Regel im Gleichgewicht mit Distickstofftetroxid vorliegend, kann dabei gasförmig oder gelöst in einem inerten organischen Lösungsmittel eingesetzt werden, vgl. auch hier Houben-Weyl a.a.O. Seite 2125 und die dort in diesem Zusammenhang genannte Primärliteratur. Auch von der Stärke ausgehend lassen sich entsprechend weitgehend selektive Oxidationen der primären Alkoholgruppe der Anhydroglucoseeinheiten zur Carboxylgruppe bewerkstelligen. So ist aus der US-amerikanischen Patentschrift US 2 472 590 die Oxidation von Stärke mit gasförmigem oder in Wasser beziehungsweise in verschiedenen organischen Lösungsmitteln gelöstem Stickstoffdioxid bekannt.

Unter diesen Bedingungen erhält man die annähernd vollständige Umwandlung der primären Alkoholgruppen der Polysaccharide in Carboxylgruppen erst nach sehr langen Reaktionszeiten, die unter Umständen bis zu mehreren Tagen betragen können. Außerdem werden bei den bekannten Verfahren hohe Stickstoffdioxidmengen, bezogen auf zu oxidierendes Polysaccharid, benötigt. Aus der internationalen Patentanmeldung WO 93/16110 ist eine wesentliche Verbesserung der Herstellung derartiger Oxidationsprodukte von Polysacchariden bekannt. Die dort offenbarte Erfindung geht von der Erkenntnis aus, daß Polycarboxylate aus Polysacchariden in einem einfachen Verfahren in hohen Ausbeuten zu gewinnen sind, wenn die Oxidationsreaktion mit Stickstoffdioxid/Distickstofftetroxid in Gegenwart von Sauerstoff bei erhöhten Temperaturen und vorzugsweise bei erhöhten Drucken durchgeführt wird. Die Formulierung "Stickstoffdioxid/Distickstofftetroxid" steht dabei, wie auch bei der vorliegenden Erfindung, für das unter den jeweiligen Reaktionsbedingungen vorliegende Gleichgewichtsgemisch aus Stickstoffdioxid und seinem Dimeren Distickstofftetroxid.

Wenn man die in diesem Dokument beschriebene Variante der suspensions- und lösungsmittelfreien Oxidation mit gasförmigem Stickstoffdioxid/Distickstofftetroxid durchführt, erhält man ein selektiv an C₆ oxidiertes Polysaccharid in fester Form. Für den direkten Einsatz als Builder oder Builderkomponente (Cobuilder) in Wasch- oder Reinigungsmitteln ist diese wenig wasserlösliche Säureform nicht gut geeignet; man bevorzugt in der Regel den Einsatz des oxidierten Polysaccharids in Form eines wasserlöslichen Salzes, das heißt des Neutralisationsproduktes der bei der Oxidation anfallenden Polycarbonsäure. Bisher wurde vorgeschlagen, diese Neutralisation mit wäßriger Base durchzuführen. Bei dieser Vorgehensweise gelangt man zu wäßrigen Lösungen des Polycarboxylats, die, wenn man das Polycarboxylat als Feststoff benötigt, einen energieaufwendigen Trocknungsschritt notwendig machen. Hinzunehmem kann dies bei der Herstellung fester Wasch- oder Reinigungsmittel sein, wenn man einen wäßrigen Aufarbeitungsschritt zur Entfernung von Nitrat und Nitrit direkt nach der eigentlichen Oxidationsreaktion und das Weiterverarbeiten der wäßrigen neutralisierten Polycarboxylatlösung im Rahmen von Sprühtrocknungsprozessen vorsieht. Besonders nachteilig ist das Anfallen von wäßrigen Polycarboxylatlösungen im Rahmen von Herstellverfahren von Wasch- und Reinigungsmitteln, die das Zusammenmischen von Feststoffkomponenten beinhalten, da hierbei das Entfernen von Wasser aus der Polycarboxylatlösung und die Überführung des gelösten Polycarboxylats in einen Feststoff unumgänglich ist.

Insbesondere bei der in der nicht vorveröffentlichten deutschen Patentanmeldung P 44 26 443.7 beschriebenen Verfahrensvariante, gemäß der sowohl auf die wäßrige Aufarbeitung der Umsetzungsprodukte von Polysacchariden mit Stickstoffdioxid/Distickstofftetroxid wie auch auf deren Vakuumbehandlung verzichtet werden kann und man dennoch zu Produkten mit akzeptabel niedrigen Nitrat- und Nitritgehalten gelangt, wenn man vor Abschluß der eigentlichen Oxidationsreaktion die Zufuhr des Oxidationsmittels Stickstoffdioxid/Distickstofftetroxid beendet und die Temperatur auf einen Wert oberhalb der Reaktionstemperatur erhöht, erscheint die wäßrige Neutralisation der so hergestellten Polycarbonsäure und die anschließende Trocknung der wäßrigen Polycarboxylatlösung geradezu paradox.

Gegenstand der Erfindung, mit der die umrissenen Probleme gelöst werden können, ist ein Verfahren zur Herstellung von festen Polycarbonsäuresalzen aus Polysacchariden durch Oxidation mit gasförmigem Stickstoffdioxid/Distickstofftetroxid unter Umwandlung zumindest eines Teils der primären Alkoholgruppen der Polysaccharide in Carboxylgruppen und wenigstens anteilsweiser Neutralisation der entstehenden Carbonsäuregruppen, welches dadurch gekennzeichnet ist, daß man die feste Polycarbonsäure mit einem festen Neutralisationsmittel vermischt.

Die der erfindungswesentlichen Neutralisation vorangehende Oxidation des Polysaccharids wird vorzugsweise so geführt wie in der deutschen Patentanmeldung P 44 26 443.7 beschrieben. Dies bedeutet, daß man die Reaktion des zu oxidierenden Polysaccharids mit Stickstoffdioxid/Distickstofftetroxid nur so lange durchführt, daß der gewünschte Oxidationsgrad, daß heißt der Umwandlungsgrad der primären Alkoholgruppen in Carboxylgruppen, nur zu höchstens 90 %, vorzugsweise zu 60 % bis 85 % und insbesondere zu 65 % bis 80 % erreicht wird. Das vollständige Erreichen des gewünschten Oxidationsgrades erfolgt dabei erst in der Nachoxidationsphase, das heißt bei beendeter Stickstoffdioxid/Distickstofftetroxid-Zufuhr und im Vergleich zur Oxidationsphase um mindestens 10 °C, vorzugsweise 15 °C bis 80 °C und insbesondere 20 °C bis 50 °C erhöhten Temperatur. Dabei ist darauf zu achten, daß durch die Erhöhung der Temperatur eine Obergrenze von 160 °C möglichst nicht überschritten wird, da bei höheren Temperaturen zunehmend Zersetzung beobachtet wurde.

Die vor Erreichen des vollständigen Umsatzes abzubrechende Oxidationsreaktion wird vorzugsweise bei Temperaturen von 30 °C bis 70 °C, insbesondere von 40 °C bis 60 °C durchgeführt. Dabei kann Sauerstoff, allein oder im Gemisch mit unter den Reaktionsbedingungen inertem Gas, anwesend sein, dessen Zugabe einmalig beim Reaktionsbeginn oder mehrfach, gewünschtenfalls kontinuierlich, während der Reaktion erfolgen kann. Bei letztgenannter Reaktionsführung kann die Oxidationsreaktion bekanntlich temperatur- oder druckabhängig über die Sauerstoffdosierung gesteuert werden. Vorzugsweise regelt man die Sauerstoffzugabe so, daß die Reaktionstemperatur im Bereich von 30 °C bis 70 °C bleibt.

Als inerte, das heißt bei den jeweils gewünschten Verfahrensbedingungen nicht reagierende Gase können Edelgase wie Helium oder Argon und Kohlendioxid, insbesondere aber Stickstoff, Stickstoffmonoxid und Distickstoffmonoxid, aber auch beliebige Mischungen derartiger Gase eingesetzt werden. Der Sauerstoffgehalt in der Gasmischung liegt dabei vorzugsweise im Bereich von 1 Vol.-% bis 30 Vol.-%, insbesondere von 3 Vol.-% bis 10 Vol.-%. Eine bevorzugte Ausführungsform des erfindungsgemäßen Verfahrens beinhaltet die Zuführung von Sauerstoff durch das Aufpressen von Luft.

Eine weitere bevorzugte Ausführungsform des Verfahrens ist dadurch gekennzeichnet, daß im Reaktionssystem vor Beginn der Oxidationsreaktion ein Druck von weniger als 10 bar, insbesondere von 2 bar bis 6 bar, bei der gewünschten Reaktionstemperatur durch Aufpressen eines genannten Inertgases eingestellt wird und anschließend Sauerstoff oder ein Gemisch aus Sauerstoff mit einem genannten Inertgas, mehrfach, gewünschtenfalls kontinuierlich, aufgepresst wird. Die Zugabe von Stickstoffdioxid/Distickstofftetroxid kann dabei vor oder nach der Sauerstoffzugabe beziehungsweise dem Beginn der Sauerstoffzugabe erfolgen. Dabei kann es erforderlich sein, das Reaktionsgefäß nach dem anfänglichen Aufpressen des Inertgases auf die gewünschte Reaktionstemperatur aufzuheizen. Während des Ablaufs der Oxidationsreaktion, die zweckmäßig unter intensiver Durchmischung der Reaktionspartner erfolgt, kann die Reaktionstemperatur in der Regel ohne äußere Heizung allein durch die Zugabemenge des Sauerstoffs gehalten werden.

Bei dem Oxidationsschritt des erfindungsgemäßen Verfahrens gelangt das Oxidationsmittel aus der Gasphase direkt auf die festen, möglichst intensiv durchmischten Polysaccharidsubstrate zur Einwirkung. Bevorzugt ist dabei die Oxidation in einer Wirbelschicht aus Polysaccharid, deren Wirbelmittel ein Stickstoffdioxid-haltiges Gas ist. Ein solches Oxidationsverfahren ist in der nicht vorveröffentlichten deutschen Patentanmeldung P 44 02 851.2 beschrieben. Unter Wirbelschicht soll dabei - ohne auf diese Art der Erzeugung beschränkt zu sein - die Erscheinung verstanden werden, die zu beobachten ist, wenn auf waagrechten, perforierten Böden lagerndes feinkörniges Schüttgut von unten von Gasen, als Wirbelmittel bezeichnet, durchströmt wird. In diesem Zusammenhang sei auf das Werk von D. Kunii und 0. Levenspiel, "Fluidization Engineering", Verlag Butterworth-Heinemann, 2. Auflage 1991, dort insbesondere die Tabelle auf den Seiten 8 und 9 sowie das Kapitel 3, verwiesen. Ein brauchbarer Reaktor für die Oxidation ist auch die im europäischen Patent EP 051 147 B1 (dort Figur 1) offenbarte Vorrichtung, bei der sich ein gasdurchströmtes Wirbelbett in einem Zylinder befindet, in dem eine mit Rührarmen ausgerüstete Welle rotiert. Möglich ist auch der Einsatz eines Reaktors mit mehrstufiger Wirbelschicht, wie in Beránek/Rose/Winterstein, "Grundlagen der Wirbelschichttechnik", Krauskopf-Verlag, 1975, Seite 72 beschrieben. Mit einer solchen Vorrichtung ist die kontinuierliche Reaktionsführung leicht möglich.

Das Wirbelmittel kann bei dieser Verfahrensvariante nach Durchströmen des Polysaccharids das Reaktionssystem verlassen und wird erfindungsgemäß vor Erreichen des gewünschten Osidationsgrades durch ein Wirbelmittel ersetzt, das kein Stickstoffdioxid/Distickstofftetroxid enthält. Bevorzugt ist dieses Wirbelmittel ein zuvor beschriebenes Inertgas.

Bei der Wirbelschicht-Variante des Oxidationsverfahrens hängt die benötigte Reaktionszeit bis zum Beenden der Zugabe von Stickstoffdioxid/Distickstofftetroxid bei gegebenem Polysaccharid und Stickstoffdioxidgehalt im Wirbelmittel im wesentlichen von dem gewünschten Oxidationsgrad und der Temperatur ab. Als Richtwerte können folgende Angaben dienen: Bei einer Temperatur von 50 °C und Normalddruck unter Einsatz von 12 Molequivalenten Stickstoffdioxid pro Stunde, bezogen auf zu oxidierende Hydroxylgruppen, werden nach 30 Minuten 18 % bis 22 %, nach 60 Minuten 60 % bis 70 % und nach 1,5 Stunden 85 % bis 95 % der primären Alkoholgruppen in Carboxylgruppen umgewandelt.

Für das oben beschriebene Oxidationsverfahren ist die Natur des eingesetzten Polysaccharids weitgehend unkritisch. Voraussetzungen sind lediglich, daß es primäre Alkoholgruppen enthaltende Kohlenhydrateinheiten enthält und in einer Form vorliegt, welche die intensive Durchmischung mit dem gasförmigen Oxidationsmittel und vorzugsweise die Ausbildung einer Wirbelschicht zuläßt, insbesondere in Pulverform. In Frage kommen native Polyglucane, insbesondere Stärke und/oder Cellulose, aber auch andere Polysaccharide, zum Beispiel Polygalactomannane wie Guaran und Carubin. Die Polysaccharide können auch in chemisch oder physikalisch modifizierter Form verwendet werden, sofern sie noch oxidierbare primäre Alkoholgruppen enthalten. Wegen der mit diesen besonders glatt ablaufenden Reaktion und aus wirtschaftlichen Gründen sind Stärken unterschiedlicher Provenienz, insbesondere Kartoffelstärke, Weizenstärke, Maisstärke und/oder Tapiokastärke, wie sie als übliche Pulver im Handel sind, bevorzugt. Da Cellulose wegen ihrer Faserigkeit oft Probleme bei der Ausbildung einer Wirbelschicht bereitet, wird sie vorzugsweise in Form von Mikropulver eingesetzt.

Das erfindungsgemäße Verfahren wird insbesondere unter Einsatz der genannten Polyglucane in seinem Oxidationsschritt vorzugsweise über einen solchen Zeitraum geführt, daß das Oxidationsprodukt im statistischen Mittel zu wenigstens .15 Mol-% aus oxidierten Anhydroglucoseeinheiten der Formel I 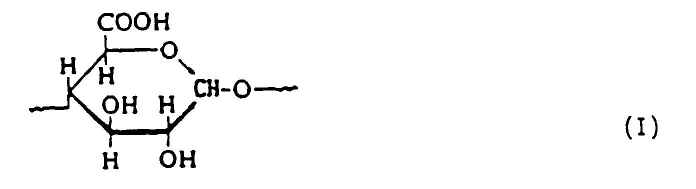 besteht, was einem Carboxylgruppengehalt von mindestens 4 Gew.-% entspricht.

Durch ein erfindungsgemäßes Verfahren erhält man Polycarboxylate auf Polyglucan-Basis, welche die oxidierten Anhydroglucoseeinheiten insbesondere der Formel I vorzugsweise zu wenigstens 25 Mol-%, insbesondere zu wenigstens 35 Mol-% im Molekül enthalten, wobei als weiterer Vorteil keine wesentlichen Mengen anderer Oxidations-Folgeprodukte vorliegen. Die Obergrenze des Gehaltes an Einheiten gemäß Formel I liegt bei 100 Mol-%, insbesondere bei etwa 95 Mol-%. Bevorzugt werden durch das erfindungsgemäße Verfahren Polycarboxylate hergestellt, welche Einheiten gemäß Formel I im Bereich von 70 Mol-% bis 100 Mol-%, entsprechend einem Carboxylgruppengehalt von bis zu ca. 25 Gew.-%, aufweisen.

Im Falle daß das zu oxidierende Polysaccharid zur Agglomeration und zur in der Fließbetttechnik gefürchteten Kanalbildung neigt, kann sein Fließverhalten durch den Zusatz geringer Mengen von insbesondere festen Additiven, zu denen beispielsweise Magnesiumoxid, Calciumfluorid, Calciumphosphat, feinteilige Zeolithe oder Kieselgel, insbesondere das unter dem Namen Aerosil^{(R)} vertriebene Siliziumdioxid gehören, signifikant verbessert werden. In dieser Hinsicht hohe Effekte werden bereits beim Einsatz niedriger Additivmengen von vorzugsweise 0,1 Gew.-% bis 5 Gew.-%, insbesondere 0,25 Gew.-% bis 1 Gew.-%, jeweils bezogen auf zu oxidierendes Polysaccharid, erreicht. Das eingesetzte Polysaccharid enthält vorzugsweise nicht mehr als 15 Gew.-%, insbesondere nicht mehr als 10 Gew.-% Wasser.

Im Anschluß an die Oxidations- und gegebenenfalls Nachoxidationsreaktion wird erfindungsgemäß wenigstens ein Teil der Carboxylgruppen des Oxidationsprodukts durch Behandeln mit einem in fester Form vorliegenden basischen Reagenz neutralisiert, das heißt von der Säure- in die Salzform übergeführt. Als Neutralisationsmittel kommen alle gängigen festen, insbesondere pulverförmigen Basen in Frage, insbesondere Alkalihydroxid, Alkalicarbonat, basisches Alkalisilkat und basisches Alkalialumosilikat sowie deren Mischungen. Dabei ist unerheblich, ob das Neutralisationsmittel in wasserfreier oder kristallwasserhaltiger Form vorliegt. Zu den bevorzugten Neutralisierungsmitteln gehören Natriumhydroxid, Natriumcarbonat, getrocknete basische Wassergläser und unter Verzicht auf den üblichen Waschschritt gewonnene, das heißt basische Zeolithe, wie Zeolith Na-A, X und/oder P. Vorzugsweise wird das Neutralisationsmittel in solchen Mengen eingesetzt, daß sämtliche Carboxylgruppen des Oxidationsproduktes in die Salzform überführt werden.

Der Neutralisationsschritt des erfindungsgemäßen Verfahrens kann dabei so erfolgen, daß man direkt im Anschluß an die Oxidation beziehungsweise Nachoxidation im Wirbelschichtreaktor die erhaltene Polycarbonsäure mit dem festen, vorzugsweise pulverförmigen Neutralisierungsmittel verwirbelt. Gewünschtenfalls kann dabei erwärmt werden, vorzugsweise wird zur Abführung der Neutralisationswärme gekühlt.

Es ist auch möglich, die Polycarbonsäure und das feste, vorzugsweise pulverförmige Neutralisierungsmittel in andere geeignete Mischaggregate zu überführen und dort reagieren zu lassen. Dabei kommt es im wesentlichen darauf an, daß die Partikel gut miteinander vermischt werden, um einen guten Kontakt der Reaktanden zu gewährleisten. Als geeignete Mischaggregate sind sowohl hochtourige Intensivmischer, zum Beispiel der CB-Recycler^{(R)} und der Pflugscharen-FM der Firma Lödige, als auch Walzenkompaktiergeräte, zum Beispiel der von der Firma Alexanderwerke^{(R)} vertriebene Walzenkompaktierer, sogenannte Shugi^{(R)}-Mischer (Firma Hosokawa-Micron^{(R)}) und schonende Mischer, wie zum Beispiel der von der Fima Forberg^{(R)} vertriebene Mischer und der Vrieco^{(R)}-Mischer der Firma Hosokawa-Micron^{(R)} zu erwähnen.

Daß es sich bei dem erfindungswesentlichen Neutralisierungsschritt tatsächlich um eine zumindest anteilsweise stattfindende Überführung von Carbonsäuregruppen in Carbonsäuresalze und nicht um einen einfachen Mischvorgang handelt, ergibt sich daraus, daß bei Auflösung in Wasser eine deutlich geringere Wärmetönung auftritt als bei gleichzeitigem Einbringen der Einzelsubstanzen in Wasser.

Die nach dem erfindungsgemäßen Verfahren hergestellten Polycarboxylate werden vorzugsweise wegen ihrer Builder oder Co-Buildereigenschaften zur Herstellung fester Wasch- oder Reinigungsmittel verwendet. In derartigen Mitteln werden sie vorzugsweise als Co-Builder in Mengen von 0,5 Gew.-% bis 10 Gew.-%, insbesondere 2 Gew.-% bis 7 Gew.-%, bezogen jeweils auf das Gesamtgewicht des Mittels, die anorganischen Builder als Haupt-Builder enthalten, verwendet. Besonders bevorzugt werden sie in letztgenannten Mitteln verwendet, die Zeolith-NaA, wie er beispielsweise im Zusammenhang mit Textilwaschmitteln in der deutschen Patentschrift DE 24 12 837 beschrieben ist, und/oder Schichtsilikate, wie sie in der europäischen Patentanmeldung EP 164 514 beschrieben sind, als Haupt-Builder und durch das erfindungsgemäße Verfahren hergestellte Polycarbonsäuresalze in Mengenverhältnissen von 2:1 bis 5:1 enthalten. Die Zusammensetzung der Wasch- und/oder Reinigungsmittel kann ansonsten im Rahmen bekannter Rezepturen praktisch beliebig gewählt werden.

### Beispiele

### Beispiel 1:

In der in Beispiel 1 der deutschen Patentanmeldung P 44 26 443.7 verwendeten Apparatur wurde Stärke oxidiert. Dazu wurden 1042,8 g Kartoffelstärke, Feuchtigkeitsgehalt 6,8 Gew.-%, mit 0,5 Gew.-% Aerosil^{(R)} 200 gemischt und in den Wirbelschichtreaktor gefüllt (Höhe 80 cm, Innendurchmesser 90 mm). stickstoff mit einer zur Fluidisierung der Stärke ausreichenden Geschwindigkeit wurde durch den Reaktor geleitet und dieser auf 50 °C erwärmt. Aus einer temperierten Vorratsflasche wurde Stickstoffdioxid durch die Wirbelschicht geleitet. Die Gasmengen wurden mit Hilfe von - auf Luft geeichten - Durchflußmessern auf 150 Normliter pro Stunde eingestellt. Nach 4 Stunden wurde die Zufuhr von Stickstoffdioxid beendet und die Reaktortemperatur wurde innerhalb von 30 Minuten auf 80 °C erhöht und 30 Minuten bei dieser Temperatur gehalten. Anschließend wurde auf Raumtemperatur abgekühlt. Erhalten wurde eine Polycarbonsäure **P1** als weißes, frei fließendes Pulver mit einer Säurezahl von 371. 110,6 g dieser oxidierten Stärke wurden mit 150 g eines gefriergetrockneten Zeoliths Na-A (OH-Zahl 274) 1 Stunde in einem gerührten Festbett unter Überleiten von Stickstoff bei 80 °C belassen. Man erhielt ein Pulver, das bei Einrühren in Wasser zu einer Temperaturtönung von + 6 °C führte. Das separate Einbringen von P1 und des Zeoliths in Wasser führte zu einer Temperaturerhöhung von 14 °C.

### Beispiel 2

Analog Beispiel 1 wurden durch Oxidation im Wirbelschichtreaktor 62 g einer Polycarbonsäure **P2** (Säurezahl 380) hergestellt. Diese wurde im Wirbelschichtreaktor belassen, 50 g basisches Natriumsilikat (Portil^{(R)} A) mit einer OH-Zahl von 472 wurde zugesetzt und mittels Durchleiten von Stickstoff über einen Zeitraum von 10 Minuten mit **P2** verwirbelt. Man erhielt ein homogenes, auch nach längerem Erwärmen auf 90 °C unverändert stabiles Produkt.

### Beispiel 3

Beispiel 2 wurde unter Ersatz des Natriumsilikats durch wasserfreies Natriumcarbonat wiederholt. Man erhielt auch hierbei ein homogenes, nach längerem Erwärmen auf 90 °C unverändert stabiles Produkt.

## Patentansprüche

1. Verfahren zur Herstellung von festen Polycarbonsäuresalzen aus Polysacchariden durch Oxidation mit gasförmigem Stickstoffdioxid/Distickstofftetroxid unter Umwandlung zumindest eines Teils der primären Alkoholgruppen der Polysaccharide in Carboxylgruppen und wenigstens anteilsweiser Neutralisation der entstehenden Carbonsäuregruppen, dadurch gekennzeichnet, daß man die feste Polycarbonsäure mit einem festen Neutralisationsmittel vermischt.

2. Verfahren nach Anspruch 1, dadurch gekennzeichnet, daß man als Neutralisationsmittel feste, insbesondere pulverförmige Basen, insbesondere Alkalihydroxid, Alkalicarbonat, basisches Alkalisilkat und basisches Alkalialumosilikat sowie deren Mischungen, einsetzt.

3. Verfahren nach Anspruch 1 oder 2, dadurch gekennzeichnet, daß man als Neutralisierungsmittel Natriumhydroxid, Natriumcarbonat, sprühgetrocknete basische Wassergläser und/oder unter Verzicht auf den üblichen Waschschritt gewonnene, das heißt basische Zeolithe, wie Zeolith Na-A, X und/oder P, einsetzt.

4. Verfahren nach einem der Ansprüche 1 bis 3, dadurch gekennzeichnet, daß man das Neutralisationsmittel in solchen Mengen einsetzt, daß sämtliche Carboxylgruppen des Oxidationsproduktes in die Salzform überführt werden.

5. Verfahren nach einem der Ansprüche 1 bis 4, dadurch gekennzeichnet, daß man im Oxidationsschritt die Zufuhr von Stickstoffdioxid/Distickstofftetroxid beendet, wenn der gewünschte Oxidationsgrad zu 60 % bis 85 %, insbesondere zu 65 % bis 80 % erreicht ist, und die Temperatur um mindestens 10 °C erhöht.

6. Verfahren nach Anspruch 5, dadurch gekennzeichnet, daß man die Temperatur um 15 °C bis 80 °C, insbesondere um 20 °C bis 50 °C erhöht.

7. Verfahren nach einem der Ansprüche 1 bis 6, dadurch gekennzeichnet, daß man mindestens 15 %, insbesondere 25 % bis 100 % der primären Alkoholgruppen der Polysaccharide in Carboxylgruppen umwandelt.

8. Verfahren nach einem der Ansprüche 1 bis 7, dadurch gekennzeichnet, daß man den Oxidationsschritt in einer Wirbelschicht, deren Wirbelmittel ein Stickstoffdioxid-haltiges Gas ist, durchführt.

9. Verfahren nach einem der Ansprüche 1 bis 8, dadurch gekennzeichnet, daß man als zu oxidierendes Polysaccharid Stärke, insbesondere Kartoffelstärke, Weizenstärke, Maisstärke und/oder Tapiokastärke, einsetzt.

10. Verfahren nach einem der Ansprüche 1 bis 9, dadurch gekennzeichnet, daß man nach dem Oxidationsschritt die Polycarbonsäure und das feste, insbesondere pulverförmige Neutralisierungsmittel in ein geeignetes Mischaggregat überführt und dort reagieren läßt.

11. Verfahren nach einem der Ansprüche 1 bis 9, dadurch gekennzeichnet, daß man den Oxidationsschritt in einem Wirbelschichtreaktor ausführt und direkt im Anschluß an den Oxidationsschritt im Wirbelschichtreaktor die erhaltene Polycarbonsäure mit dem festen, insbesondere pulverförmigen Neutralisierungsmittel verwirbelt.

## Claims

1. A process for the production of solid polycarboxylic acid salts from polysaccharides by oxidation with gaseous nitrogen dioxide/dinitrogen tetroxide with at least partial conversion of the primary alcohol groups of the polysaccharides into carboxyl groups and at least partial neutralization of the carboxylic acid groups formed, characterized in that the solid polycarboxylic acid is mixed with a solid neutralizing agent.

2. A process as claimed in claim 1, characterized in that solid, more particularly powder-form bases, more especially alkali metal hydroxide, alkali metal carbonate, basic alkali metal silicate and basic alkali metal alumosilicate and mixtures thereof are used as the neutralizing agent.

3. A process as claimed in claim 1 or 2, characterized in that sodium hydroxide, sodium carbonate, spray-dried basic waterglasses and/or zeolites obtained without the usual washing step, i.e. basic zeolites, such as zeolite NaA, X and/or P, are used as the neutralizing agent.

4. A process as claimed in any of claims 1 to 3, characterized in that the neutralizing agent is used in such quantities that all the carboxyl groups of the oxidation product are converted into the salt form.

5. A process as claimed in any of claims 1 to 4, characterized in that, in the oxidation step, the introduction of nitrogen dioxide/dinitrogen tetroxide is terminated when 60% to 85%, more particularly 65% to 80%, of the required degree of oxidation is reached and the temperature is increased by at least 10°C.

6. A process as claimed in claim 5, characterized in that the temperature is increased by 15°C to 80°C and, more particularly, by 20°C to 50°C.

7. A process as claimed in any of claims 1 to 6, characterized in that at least 15% and, more particularly, 25% to 100% of the primary alcohol groups of the polysaccharides are converted into carboxyl groups.

8. A process as claimed in any of claims 1 to 7, characterized in that the oxidation step is carried out in a fluidized bed of which the fluidizing agent is a gas containing nitrogen dioxide.

9. A process as claimed in any of claims 1 to 8, characterized in that starch, more particularly potato starch, wheat starch, corn starch and/or tapioca starch, is used as the polysaccharide to be oxidized.

10. A process as claimed in any of claims 1 to 9, characterized in that the polycarboxylic acid and the solid, more particularly powder-form neutralizing agent are transferred to a suitable mixing unit after the oxidation step and allowed to react therein.

11. A process as claimed in any of claims 1 to 9, characterized in that the oxidation step is carried out in a fluidized-bed reactor and, immediately after the oxidation step, the polycarboxylic acid obtained is fluidized with the solid, more particularly powder-form neutralizing agent in the fluidized-bed reactor.

## Revendications

1. Procédé de préparation de sels d'acides polycarboxyliques solides à partir de polysaccharides, par oxydation avec du dioxyde/tétroxyde d'azote gazeux, sous conversion d'au moins une partie des groupes alcool primaire des polysaccharides en groupes carboxyle et neutralisation au moins partielle des groupes d'acide carboxylique formés, caractérisé en ce que l'on mélange l'acide polycarboxylique solide avec un agent de neutralisation solide.

2. Procédé selon la revendication 1, caractérisé en ce que l'on met en oeuvre comme agents de neutralisation, des bases solides, en particulier pulvérulentes, en particulier l'hydroxyde de métal alcalin, le carbonate de métal alcalin, le silicate de métal alcalin basique et l'aluminosilicate de métal alcalin basique, ainsi que les mélanges de ceux-ci.

3. Procédé selon la revendication 1 ou 2, caractérisé en ce que l'on met en oeuvre comme agents de neutralisation, l'hydroxyde de sodium, le carbonate de sodium, les verres solubles basiques séchés par pulvérisation et les zéolithes obtenues en omettant l'étape de lavage habituelle, c'est-à-dire basiques, telles les zéolithes Na-A, X et/ou P.

4. Procédé selon une des revendications 1 à 3, caractérisé en ce que l'agent de neutralisation est mis en oeuvre en proportions telles que tous les groupes carboxyle du produit d'oxydation sont convertis sous forme de sel.

5. Procédé selon une des revendications 1 à 4, caractérisé en ce que l'on interrompt dans l'étape d'oxydation, l'amenée de dioxyde/tétroxyde d'azote lorsque le degré d'oxydation souhaité est atteint à raison de 60 à 85 %, en particulier à 65 à 80 %, et que l'on augmente la température d'au moins 10°C.

6. Procédé selon la revendication 5, caractérisé en ce que l'on augmente la température de 15 à 80 °C, en particulier de 20 à 50 °C.

7. Procédé selon une des revendications 1 à 6, caractérisé en ce que l'on convertit au moins 15 %, en particulier 25 à 100 % des groupes d'alcool primaire des polysaccharides en groupes carboxyle.

8. Procédé selon une des revendications 1 à 7, caractérisé en ce que l'on opère l'étape d'oxydation dans un lit fluidisé, dont l'agent de fluidisation est un gaz renfermant du dioxyde d'azote.

9. Procédé selon une des revendications 1 à 8, caractérisé en ce que l'on met en oeuvre comme polysaccharide à oxyder, de l'amidon, en particulier de l'amidon de pommes de terre, de froment, de maïs et/ou de tapioca.

10. Procédé selon une des revendications 1 à 9, caractérisé en ce qu'après l'étape d'oxydation, on transfère et on laisse réagir l'acide polycarboxylique et l'agent de neutralisation solide, de préférence pulvérulent, dans un groupe mélangeur approprié.

11. Procédé selon une des revendications 1 à 9, caractérisé en ce que l'on opère l'étape d'oxydation dans un réacteur à lit fluidisé et que l'on fait entrer en turbulence dans le réacteur à lit fluidisé l'acide polycarboxylique obtenu avec l'agent de neutralisation solide, de préférence pulvérulent, directement à la suite de l'étape d'oxydation.
